# EUROPÄISCHE PATENTANMELDUNG

(11) **EP 1 783 447 A2**
(43) Veröffentlichungstag der Anmeldung: **09.05.2007**
(21) Anmeldenummer: 06022911.9
(22) Anmeldetag: 03.11.2006
(51) Int. Cl.: F25D 29/00

(54) **Kühlmöbel**

(30) Priorität: 03.11.2005 DE 102005052952
(71) Anmelder: Ice Age Ice GmbH & Co KG, 63477 Maintal (DE)
(72) Erfinder: Meredith, Matthew David, 60316 Frankfurt am Main (DE)
(74) Vertreter: Walkenhorst, Andreas

(57) **Zusammenfassung**

Eine Kühlmöbel (1) mit einem Warenraum (4) für industriell gefertigte Kühlware soll derart ausgelegt sein, dass diese möglichst effizient mit Neuware beliefert werden kann. Dazu weist ein Warenraum (4) einer Kühlmöbel (1) einen Füllstandssensor auf.

## Beschreibung

Die Erfindung betrifft ein Kühlmöbel mit einem Warenraum für industriell gefertigte Kühlware.

Eiswürfel bestehen aus gefrorenem Wasser und werden in der Regel in der Gastronomie und im privaten Bereich benötigt. Dabei werden diese insbesondere für die Zubereitung bzw. Kühlung von Cocktails und anderen Kaltgetränken verwendet. Außerdem können sie zur Kühlung von kalten Speisen, zum Beispiel bei grö-βeren Buffets, eingesetzt werden. Neben Eiswürfeln werden zur Zubereitung von Cocktails vermehrt auch gehackte Eiswürfel, so genanntes "Crushed lce", verwendet. Zur Herstellung von Eiswürfeln kann in einem Tiefkühlschrank Wasser in Eiswürfelformen oder auch in Tüten mit einer Anzahl von Waben gefroren werden. Außerdem gibt es Kühl- und Tiefkühlschränke, die Eiswürfel selbstständig produzieren und diese in einem Behälter zur Entnahme vorhalten.

In der Gastronomie, bei größeren Veranstaltungen oder auch bei größeren privaten Feiern, bei denen größere Mengen Eiswürfel benötigt werden, ist die Eigenproduktion der Eiswürfel in der Regel nicht mehr praktikabel und zu kostenintensiv, so dass hierzu in der Regel industriell gefertigte Eiswürfel gekauft werden. Industriell gefertigte Eiswürfel und auch industrielles "Crushed Ice" wird üblicherweise nach Gewicht in Plastiktüten abgefüllt und verpackt, in Kühlmöbeln gelagert und zum Verkauf angeboten. Kühlmöbel zum Verkauf von Eiswürfeln, beispielsweise Kühlschränke, Kühltruhen oder Tiefkühltruhen, werden in der Regel in Großhandelsmärkten, Supermärkten und auch in Tankstellen aufgestellt.

Neben Wasser wird zur Herstellung von Eiswürfeln eine große Menge elektrischer Energie benötigt, so dass industriell hergestellte Eiswürfel zentral produziert werden. Dabei können größere Gefriermaschinen eingesetzt werden, wodurch sich einerseits die Energiekosten minimieren lassen und andererseits nur wenige Gefriermaschinen installiert und gebaut werden müssen, wodurch sich auch die Investitionskosten gering halten lassen.

Nachteilig an der zentralen Produktion ist jedoch, dass die Eiswürfel zu den Kunden bzw. zu den aufgestellten Kühlmöbeln transportiert werden müssen, was bei der Bereitstellung der Eiswürfel einen erheblichen Kostenaufwand darstellt. Dazu führt insbesondere, dass durch die zentrale Produktion die Produktionskosten, die sich aus den Fixkosten und den im Vergleich dazu relativ niedrigen variablen Stückkosten für Wasser- und Energie zusammensetzen im Hinblick auf die Transportkosten aufgrund der spezifischen Eigenschaften der Eiswürfel die variablen Stückkosten unverhältnismäßig stark erhöht werden.

Zusätzlich ist die Nachfrage nach Eiswürfeln und "Crushed Ice" stark zyklisch, so dass es schwer vorherzusagen ist, wann eine Kühlmöbel neu befüllt werden muss. Die Ursache für die zyklische Nachfrage ist dabei einerseits eine Wochentagabhängigkeit oder das Wetter, wobei bei wärmeren Tagen deutlich mehr Eiswürfel gekauft werden, und andererseits für den Produzenten nicht vorhersehbare Großveranstaltungen, bei denen überraschend größere Mengen Eiswürfel gekauft werden. Um zu vermeiden, dass die Eiswürfel einzelner Kühlmöbeln völlig ausverkauft sind, kann die Größe der Kühlmöbel jedoch nicht unbegrenzt vergrößert werden, weil sich hierdurch die Energiekosten für den Betrieb der Kühlmöbel und auch der Mietpreis für die Stellflächen der Kühlmöbel erhöhen würde

Bei der Belieferung der Kühlmöbel wird daher versucht, den Füllstand des jeweiligen Kühlmöbels zur Bestimmung eines geeigneten Auffülltermins zu prognostizieren. Nachteilig an dieser in der Praxis üblichen Vorgehensweise ist, dass durch die oben beschriebene Problematik der zyklischen Nachfrage die Eiswürfel aus Kühlmöbeln ausverkauft werden, oder aber noch ausreichend gefüllte Kühlmöbel unnötig vom Produzenten zur Neubefüllung angefahren werden. Hierdurch entstehen Umsatzausfälle und unnötige Transportkosten.

Der Erfindung liegt daher die Aufgabe zugrunde, ein Kühlmöbel mit einem Warenraum für industriell gefertigte Kühlware anzugeben, das möglichst effizient mit Neuware beliefert werden kann.

Diese Aufgabe wird erfindungsgemäß gelöst, indem der Warenraum des Kühlmöbels einen Füllstandssensor aufweist.

Die Erfindung geht dabei von der Überlegung aus, dass für eine effiziente Befüllung einer Anzahl von Kühlmöbeln die Routenplanung der Befüllung optimiert werden sollte. Hierzu sollte die Menge an Kühlware, die sich im Warenraum eines Kühlmöbels befindet, bekannt sein und daher ermittelt oder gemessen werden. Anhand des Befüllungszustandes kann sodann entschieden werden, ob ein Kühlmöbel mit Neuware beliefert werden muss oder nicht. Außerdem ist dabei eine verbesserte Prognose erstellbar, zu welchem Zeitpunkt eine Befüllung erforderlich ist. Zur Messung des Füllstandes eines Kühlmöbels weist dessen Warenraum daher einen Füllstandssensor auf.

Um den Füllstand der Kühlware im Warenraum unabhängig von der Art und Weise der Lagerung bzw. der Aufstapelung der einzelnen Kühlwarenprodukte zu ermitteln, ist als Füllstandssensor vorteilhafterweise eine Waage vorgesehen. Die Wage kann dabei abhängig von Typus und Beladungsweise des Kühlmöbels geeignet positioniert sein , so dass eine besonders zuverlässige Messung des Gewichts der im Kühlmöbel vorhandenen Ware möglich ist. Mit dem gemessenen Gewicht der Kühlware kann über das bekannte Gewicht der einzelnen Kühlwarenprodukte deren Anzahl oder ein sonstiger für den Füllstand charakteristischer Kennwert ermittelt werden.

Zur Messung des Gewichtes die eine Waage zweckmäßigerweise einen Dehnungsmessstreifen auf. Dieser kann eine aufgrund der Masse der Kühlware auftretende Bewegung, beispielsweise die Bewegung des Bodens des Warenraumes, erfassen und so das Gewicht der Kühlware ermitteln.

In alternativer oder zusätzlicher vorteilhafter Ausgestaltung umfasst der Füllstandssensor ein so genanntes RFID-Sensorsystem. Dabei ist vorzugsweise innerhalb des Warenraums ein Sender, beispielsweise ein RF-Sender, vorgesehen, der zur Abfrage des Füllstandes ein charakteristisches Signal emittiert. In einem derartigen System sind die Warenpackungen jeweils in der Art einer Codierung mit geeigneten Chips bestückt, die in passiver Weise in Reaktion auf das emittierte Signal ein Antwortsignal reflektieren, das wiederum von der Sende- und Empfangseinheit empfangen werden kann. In der Art einer Codierung können die Chips dabei derart individualisiert ausgeführt sein, dass ein charakteristisches Antwortsignal entsteht, das beispielsweise von Art, Verfallsdatum oder anderen Parametern der jeweiligen Ware abhängt. Durch Auswertung dieser Signale kann somit über den globalen Füllstand hinaus in der Art einer qualifizierten Füllstandsmessung auch die Zusammensetzung der im Warenraum befindlichen Ware ermittelt werden, so dass besonders bedarfsgerecht eine Neubefüllung veranlasst werden kann. Dies ist insbesondere für die Beschickung der Kühlmöbel mit verschiedenen Warensorten, beispielsweise sowohl mit Eiswürfeln als auch mit gestoßenem Eis oder mit verschiedenen Speiseeissorten, vorteilhaft.

Um den Füllstand einer Kühlmöbel abzufragen oder diesen an eine zentrale Auswerteeinheit zu senden, ist der jeweilige Füllstandssensor vorzugsweise mit einer. Datenübertragungseinheit verbunden.

Zur Übermittlung der Füllstände sind eine Mehrzahl von dezentral aufgestellten Kühlmöbeln eines Warenwirtschaftssystems für industriell gefertigte Kühlware vorteilhafterweise datenseitig jeweils über eine Datenübertragungseinheit mit einer zentralen Auswerteeinheit verbunden. Eine Datenübertragungseinheit kann dabei je nach Verfügbarkeit und Kosten für eine drahtlose oder drahtgebundene Kommunikation ausgelegt sein. Hierfür kommt beispielsweise Mobilfunk (GSM, GPRS, UMTS), Funk, Draht, WLAN, das Internet oder eine Verbindung über das Stromnetz ("Powerline") zur Auswahl. Besonders vorteilhaft ist dabei eine Kommunikation als IP-Verbindung, da die dabei genutzten Protokolle für nahezu alle Hardwaretypen bei der Auswertung geeignet sind.

Beim Betrieb eines derartigen Warenwirtschaftssystems wird der Füllstand der jeweiligen Kühlmöbel zweckmäßigerweise über eine Datenübertragungseinheit zur Auswerteeinheit übertragen. Dabei kann eine Übertragung und nachfolgende Auswertung der Füllstände beispielsweise kontinuierlich im Sinne einer zyklischen Überwachung erfolgen. Alternativ können die Füllstände aber auch zwischengespeichert werden und in vergleichsweise lang bemessenen Zeitabständen im Sinne einer Protokollierung übermittelt und ausgewertet werden.

Um in der zentralen Auswerteeinheit einen übertragenen Füllstand einer bestimmten Kühlmöbel zuordnen zu können, wird bei der Übertragung vorzugsweise eine individuelle Codierung einer Kühlmöbel mit übertragen. Zusätzlich können hierbei noch die Zeit der Füllstandsmessung und andere Parameter wie beispielsweise Temperaturwerte übertragen werden.

Die Übertragung kann dabei in vorgegebenen Abständen erfolgen. Alternativ kann der Füllstand auch nur bei Bedarf, also wenn der Füllstand einer Kühlmöbel einen maximale Mindestfüllstand unterschreitet, zur zentralen Auswerteeinheit übertragen werden. Hierfür wird ein Füllstand einer Kühlmöbel vorteilhafterweise in einem Datenspeicher einer Kühlmöbel abgespeichert.

Um den Füllstand einer Kühlmöbel auch von der zentralen Auswerteeinheit aus dem Datenspeicher abfragen zu können, ist das Übertragungsverfahren zweckmäßigerweise bidirektional ausgelegt. Bei der Abfrage kann dabei auch ein Befehl zu einer neuen Füllstandmessung einer Kühlmöbel und deren Übertragung zur zentralen Auswerteeinheit gesendet werden.

Für eine einfache Füllstandsbestimmung und um die übertragenen Daten der Füllstände übersichtlich zu halten, wird ein aktueller Füllstand einer Kühlmöbel zweckmäßigerweise nicht nach jeder Entnahme übertragen. Vielmehr wird ein gemessener Füllstand vorzugsweise in Form vorbestimmter Füllstandskategorien übertragen. Vielmehr wird der Füllstand auf die vorbestimmten Füllstandskategorien gerundet. Die Füllstandskategorien sind hierfür an die Größe einer Kühlmöbel angepasst, so dass für die Belieferung mit Neuware die Menge dieser anhand der Kategorien und der Größe der Kühlmöbel ermittelt werden kann. Insbesondere können dabei Kategorien der Art "vollständig gefüllt", "mehr als halb gefüllt", "mehr als ein Viertel gefüllt", "weniger als ein Viertel gefüllt" vorgesehen sein.

Um den Entnahme- und Auffüllprozess der Kühlware möglichst zeitnah zu erfassen, erfolgt eine Übertragung eines Füllstandes vorteilhafterweise jeweils dann, wenn dieser eine neue Füllstandskategorie erreicht hat.

Die mit der Erfindung erzielten Vorteile bestehen insbesondere darin, dass über die Messung der Füllstände von Kühlmöbeln und der Übertragung dieser an eine zentrale Auswerteeinheit der exakte Bedarf an Neuware bekannt ist und dieser dadurch zusätzlich auch genauer prognostiziert werden kann. So kann beispielsweise das Problem der zyklischen Nachfrage von Kühlware entschärft werden, indem eine dynamisch anziehende Nachfrage sofort detektiert wird und eine Belieferung mit Neuware veranlasst wird.

Anhand der ermittelten Füllstände kann die Belieferung an diesen Bedarf angepasst werden bzw. der Belieferungs- und die Logistikprozesse optimiert werden, indem eine Mehrzahl von Kühlmöbeln anhand einer an den Bedarf angepassten Streckenplanung beliefert werden.

Hierdurch können erhebliche Kosten eingespart werden, indem die Auslastung der Belieferungsfahrzeuge maximiert wird, Anfahrten zu noch gefüllten Kühlmöbeln entfallen und die Anzahl der Anfahrten zu Kühlmöbeln minimiert werden, indem Kühlmöbeln nur dann neu befüllt werden, kurz bevor sie ausverkauft sind. Außerdem können mit der Erfindung Umsatzverluste verringert werden, die zuvor durch ausverkaufte Kühlmöbeln aufgetreten sind.

Ein weiterer Vorteil der Erfindung besteht in der Möglichkeit, anhand der Füllstandsmessungen Kundenprofile zu erstellen und diese wirtschaftlich zu nutzen.

Nachfolgend wird ein Ausführungsbeispiel der Erfindung anhand einer Zeichnung näher erläutert. Darin zeigen:
- Fig. 1: schematisch ein Warenwirtschaftssystem für Eiswürfel,
- Fig. 2: im Schnitt ein Kühlmöbel für Eiswürfel eines Warenwirtschaftssystems nach Fig. 1, und
- Fig. 3: ein alternatives Kühlmöbel für das Warenwirtschaftssystem nach Fig.1.

Gleiche Teile sind in allen Figuren mit den selben Bezugszeichen versehen.

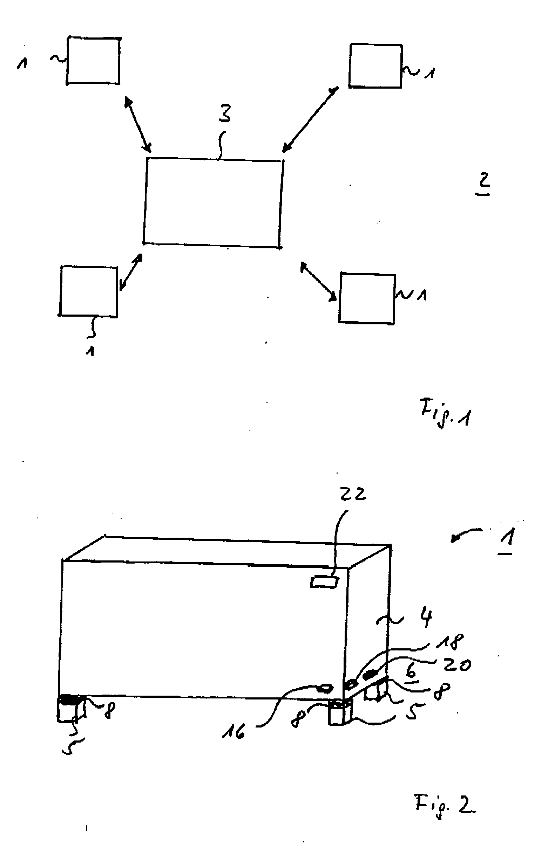

In Fig. 1 ist schematisch ein Warenwirtschaftssystem 2 für industriell hergestellte Eiswürfel und/oder so genanntes "Crushed Ice" mit einer Anzahl von Kühlmöbeln 1 dargestellt. Die Kühlmöbel 1 sind dezentral in verschieden Supermärkten, Läden und Tankstellen aufgestellt. Um die Kühlmöbel 1 möglichst effizient und kostengünstig mit Eisprodukten beliefern zu können, sind das Warenwirtschaftssystem 2 und die Kühlmöbel 1 für eine individuelle Ermittlung des Bedarfs an Neuware für jedes einzelne Kühlmöbel 1 ausgelegt. Hierfür verfügt jedes Kühlmöbel 1 über einen Füllstandssensor, über den sich der Füllstand des Kühlmöbels 1 ermitteln lässt. Zur näheren Verdeutlichung ist in Fig. 2 ein Kühlmöbel 1 eines Warenwirtschaftssystems 2 dargestellt.

Das Kühlmöbel 1 könnte beispielsweise als Kühlschrank ausgeführt sein. Im Ausführungsbeispiel ist das Kühlmöbel 1 jedoch eine Kühltruhe, insbesondere eine Tiefkühltruhe. Das Kühlgut wird dabei in einem von einer Außenwand umgebenen Warenraum 4 vorgehalten, wobei insbesondere in Tüten verpackte Eiswürfel vorgesehen sind. Der den Warenraum 4 umgebende Korpus der Kühltruhe ist auf vier Füßen 5 gelagert. In diese ist zur Bildung einer Waage 6 jeweils eine Wägezelle mit Dehnungsmessstreifen 8 integriert, so dass über Aufnahme der lokalen

Belastung der Füße und unter Berücksichtigung charakteristischer Parameter der Kühltruhe wie beispielsweise deren Eigengewicht das Gewicht der Eiswürfel bestimmt werden kann. Hierüber ist der Füllstand im Warenraum ermittelbar, so dass die Waage 6 als Füllstandssensor dient. Alternativ kann zur Bestimmung des Gewichtes bzw. zur Füllstandsmessung auch beispielsweise ein Gewichtssensor, ein Temperatursensor, ein Füllmengensensor, ein Ultraschallsensor, ein Bewegungsmelder, ein Drucksensor, eine Lichtschranke, ein Radar, ein Sonar oder ein Laser für Tiefenmessung eingesetzt werden.

Mit dem Gewicht der Eiswürfel als Eingangsgröße wird über den Mikrokontroller 16 der Füllstand der noch vorhandenen Eiswürfeltüten berechnet und überwacht Der Füllstand kann dabei in der Art eines kontinuierlichen Parameters erfasst und ausgewertet werden. Im Ausführungsbeispiel ist aber für eine besonders einfach gehaltene, nur geringe Verarbeitungskapazitäten erfordemde Bearbeitung vorgesehen, den Füllstand für eine bessere Übersichtlichkeit in eine Anzahl von (im Ausführungsbeispiel vier) Messgrenzen zu unterteilen: volle Zuladung, ¾ Zuladung, ½ Zuladung und ¼ Zuladung. Wird eine dieser Messgrenzen erreicht, wird eine Meldung mit Datumsstempel, Uhrzeit und einer Kühlmöbelidentifikationscodierung über eine Datenübertragungseinheit 18 zur Auswerteeinheit 3 übertragen. Zusätzlich wird der Füllstand in einem Datenspeicher 20 abgespeichert und kann von der Auswerteeinheit 3 über die Datenübertragungseinheit 18 bei Bedarf abgefragt werden.

Das Übertragungsverfahren ist hierfür bidirektional ausgelegt, wobei im Ausführungsbeispiel das Kühlmöbel 1 über die Datenübertragungseinheit 18 mit dem Internet mit der Auswerteeinheit 3 verbunden ist. Dabei sind alternativ auch andere Übertragungsmethoden, wie beispielsweise eine Übertragung über das Stromnetz, per WLAN, per Funk, per Mobilfunk (GSM, GPRS, UMTS) oder über eine separate Übertragungsleitung denkbar.

Falls nach sieben Tagen keine Datenübertragung stattgefunden hat, sendet der Mikrokontroller 16 automatisch ein Prüfsignal an die Auswerteeinheit 3.

Das Programm des Mikrokontrollers 16 ist derart ausgelegt, dass es sich ohne Programmierkenntnisse an eine individuelle Größe eines Kühlmöbels 1 anpassen lässt. Die Parameter des Kühlmöbels 1, wie Größe, Leergewicht und Zuladung werden hierfür über ein Tastenfeld 22 am Kühlmöbel 1 oder auch in der Art einer Ferninitialisierung über die Auswerteeinheit 3 eingegeben. Bei der Erstinbetriebnahme wird das Programm Ober einen Computer über eine serielle Schnittstelle, die in der Zeichnung nicht näher dargestellt ist, aufgespielt. Die Kühlmöbelidentifikationscodierung kann dabei entweder über das Tastenfeld 22 oder alternativ über ein Interface dem Kühlmöbel 1 zugeordnet werden.

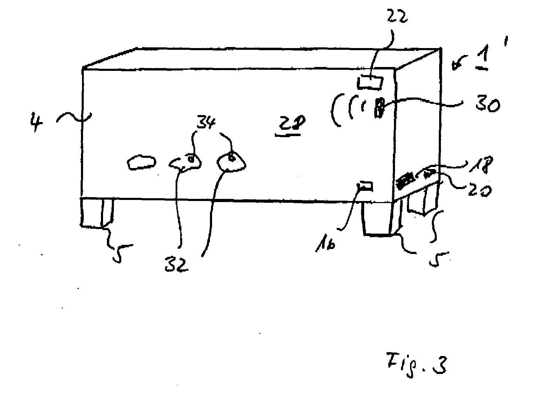

Eine alternative Ausgestaltung eines Kühlmöbels 1 ist in Fig. 3 dargestellt. Hinsichtlich einer Vielzahl von Komponenten, beispielsweise betreffend die Datenverarbeitung, -speicherung und/oder -übertragung, ist das Kühlmöbel 1 dabei im wesentlichen baugleich zum Kühlmöbel 1 ausgeführt. Unterschiedlich ist allerdings das dort vorgesehene System zur Füllstandsmessung. Das Kühlmöbel 1 umfasst nämlich als Füllstandssensor ein so genanntes RFID-Sensorsystem 28 Dabei ist innerhalb des Warenraums 4 eine Sende- und Empfangseinheit 30, im Ausführungsbeispiel ein RF-Sender, angeordnet. Zur Abfrage des Füllstandes emittiert die Sende und Empfangseinheit 30 ein charakteristisches Signal, das von in die Warenpackungen 32 der im Warenraum 4 befindlichen Waren eingearbeiteten Chips 34 reflektiert wird- Die Chips 34 sind dabei derart konfiguriert, dass das von ihnen reflektierte Signal in der Art einer charakteristischen Signatur individuelle, chipspezifische Eigenschaften aufweist.

Durch geeignete Codierung und Auswertung dieser reflektierten Signale können somit für die jeweilige Warenpackung 32 charakteristische Informationen wie beispielsweise Art der Waren, Mengeneinheit, Verfallsdatum oder dergleichen mit übertragen werden. In passiver Weise in Reaktion auf das emittierte Signal reflektieren die Chips 34 somit ein Antwortsignal, das wiederum von der Sende- und Empfangseinheit 30 empfangen werden kann. Durch Auswertung dieser Signale kann somit über den globalen Füllstand hinaus in der Art einer qualifizierten Füllstandsmessung auch die Zusammensetzung der im Warenraum 4 befindlichen Ware ermittelt werden, so dass besonders bedarfsgerecht eine Neubefüllung veranlasst werden kann. Dies ist insbesondere für die Beschickung der Kühlmöbel 1 mit verschiedenen Warensorten, beispielsweise sowohl mit Eiswürfeln als auch mit gestoßenem Eis oder mit verschiedenen Speiseeissorten, vorteilhaft.

### Bezugszeichenliste

- 1: Kühlmöbel
- 2: Warenwirtschaftssystem
- 3: Auswerteeinheit
- 4: Warenraum
- 5: Fuß
- 6: Waage
- 8: Dehnungsmessstreifen
- 16: Mikrokontroller
- 18: Datenübertragungseinheit
- 20: Datenspeicher
- 22: Tastenfeld
- 28: Sensorsystem
- 30: Sende- und Empfangseinheit
- 32: Warenpackung
- 34: Chip

## Patentansprüche

1. Kühlmöbel (1) mit einem Warenraum (4) für industriell gefertigte Kühlware, der mit einem Füllstandssensor versehen ist.

2. Kühlmöbel (1) nach Anspruch 1, bei dem als Füllstandssensor eine Waage (6) vorgesehen ist.

3. Kühlmöbel (1) nach Anspruch 2, dessen Waage (6) eine Wägezelle mit einem Dehnungsmessstreifen (8) aufweist.

4. Kühlmöbel (1) nach Anspruch 1, bei dem als Füllstandssensor ein RFID-System vorgesehen ist.

5. Kühlmöbel (1) nach einem der Ansprüche 1 bis 4, dessen Füllstandssensor mit einer Datenübertragungseinheit (10) verbunden ist.

6. Warenwirtschaftssystem (2) für industriell gefertigte Kühlware, bei dem eine Mehrzahl von dezentral aufgestellten Kühlmöbeln (1) nach einem der Ansprüche 1 bis 5 datenseitig jeweils über eine Datenübertragungseinheit (10) mit einer zentralen Auswerteeinheit (3) verbunden sind.

7. Verfahren zur Übermittlung der Füllstände der Warenräume (4) der Kühlmöbel (1) eines Warenwirtschaftssystems (2) nach Anspruch 6, wobei ein Füllstand eines Kühlmöbels (1) über eine Datenübertragungseinheit (10) zur Auswerteeinheit (3) übertragen wird.

8. Verfahren nach Anspruch 7, wobei bei der Übertragung eines Füllstandes eine individuelle Codierung eines Kühlmöbels (1) mit übertragen wird.

9. Verfahren nach Anspruch 7 oder 8, wobei ein Füllstand eines Kühlmöbels (1) in einem Datenspeicher (14) des Kühlmöbels (1) abgespeichert wird.

10. Verfahren nach einem der Ansprüche 7 bis 9, das für eine bidirektionale Datenübertragung ausgelegt ist.

11. Verfahren nach einem der Ansprüche 7 bis 10, wobei ein gemessener Füllstand eines Kühlmöbels (1) einer vorgegebenen Füllstandskategorie zugeordnet wird, wobei anschließend zur Charakterisierung des Füllstands die jeweilige Füllstandskategorie übertragen wird.

12. Verfahren nach Anspruch 11, wobei eine Übertragung eines Füllstandes jeweils dann erfolgt, wenn ein Füllstand eines Kühlmöbels (1) eine neue Füllstandskategorie erreicht hat.
